# EUROPEAN PATENT SPECIFICATION

(11) **EP 2 323 931 B1**
(45) Date of publication and mention of the grant of the patent: **16.10.2013**
(21) Application number: 09788146.0
(22) Date of filing: 13.08.2009
(51) Int. Cl.: B65G 47/91, B65G 61/00, B25J 15/06

(54) **GRIPPER FOR A MANIPULATOR**
GREIFER FÜR EINEN MANIPULATOR
DISPOSITIF DE PRÉHENSION POUR MANIPULATEUR

(30) Priority: 14.08.2008 NL 2001889
(43) Date of publication of application: 25.05.2011
(73) Proprietor: Jeko Control B.v., 5813 BH Ysselsteyn (NL); Beheersmaatschappij G.A. Ch.M. Jentjens B.V., 5466 AL Veghel (NL)
(72) Inventor: KONINGS, Johannes, Wilhelmus, Maria, NL-5813 BH Ysselsteyn (NL)
(74) Representative: Verhees, Godefridus Josephus Maria
(86) International application number: PCT/NL2009/000158
(87) International publication number: WO 2010/019029

(56) References cited:
- CA-A1- 2 291 927
- JP-A- 3 032 586
- NL-A- 9 101 951
- US-A- 5 024 575
- US-A1- 2003 120 387
- US-A1- 2007 280 812

## Description

### Field of the invention.

The invention relates to a gripper for a manipulator for grasping products according to the preamble of claim 1, more specifically filled bags, comprising a mounting element with which the gripper can be mounted onto a manipulator, a frame connected to the mounting element having at least a single clamping component located in a clamping surface against which clamping component a product to be grasped can be clamped, as well as at least a single displaceable frame-connected finger which is displaceable to a position in which the free extremity of the finger is positioned opposite to the clamping surface, frame-connected displacement means for displacing the finger, and at least a single suction pad displaceably connected to the mounting element and having a suction opening which is confined by a boundary edge.

### State of the art.

A gripper of this type according to the preamble of claim 1 is known from CA2292927A. By initially grasping a bag with a suction pad and lifting it, the bag can then be clamped in a simple manner. Filled bags may be supplied by a belt conveyor or lie against one another on a pallet and are to be picked up. Sometimes robots with grippers are used for this purpose. It is awkward to open a bag with a relatively simple gripper.

### Summary of the invention.

It is an object of the invention to provide a gripper of the type defined in the opening paragraph which is relatively simple and with which bags can be grasped very well. For this purpose the gripper according to the invention is characterised in that the suction pad being movable to an active state in which the suction pad with the boundary edge is located in the clamping surface. Then only the finger needs to be displaced to clamp the bag.

Preferably, the suction pad is pivotably connected to the mounting element. The advantage of this is that the bag continues to be in the same position during the turning action of the gripper.

The gripper may also comprise displacement means for the suction pad, which displacement means are connected to the mounting element.

Furthermore, the gripper preferably comprises at least a single further suction pad which is displaceably connected to the frame and which can be displaced to a position in which the further suction pad is placed opposite to the suction pad already present. This further suction pad is preferably connected to the displaceable finger.

After the bags have been lifted they are to be opened and emptied. For this purpose the bag is preferably held vertical and cut open at the bottom and preferably also at the two sides. The bag can be cut open in that the robot moves the bag past a cutting device. When a filled bag is opened it loses its rigidity so that the bag can no longer be held tight by the suction pad or suction pads. Furthermore, the bag can no longer be flattened completely because otherwise part of the contents will stay behind in the bag.

An embodiment of the gripper according to the invention with which a filled bag can be held tight also during the emptying operation is characterised in that the gripper further comprises at least a single frame-connected pin, which pin is displaceable to a position in which it can stick into the product to be grasped and holds it like that. Preferably the gripper comprises in addition to the said pin at least a single frame-connected further pin, with the pins forming a pair and being located at two spots facing each other beside the suction pad when the gripper is in the active state.

A further embodiment of the gripper according to the invention is characterised in that the gripper comprises in addition to said pair of pins at least a single frame-connected further pair of pins of which the pins are located on the pair of pins' sides that are turned away from the suction pad. As a result, bags of different sizes can always be retained by at least two pins.

Yet a further embodiment of the gripper according to the invention is characterised in that the pin or the pins can be displaced parallel to the clamping surface. As a result, a greater variety of bags can be retained.

In again a further embodiment of the invention the pin or pins are provided with a channel and compressed air channels are present for blowing air through the pin or pins.

Yet again a further embodiment of the gripper according to the invention is characterised in that the frame comprises in addition to said clamping component a further clamping component which is located in the clamping surface, while the suction pad in active state is located in between the clamping components and in that the gripper comprises a further finger in addition to said finger, with the fingers being located opposite to the clamping components.

Each finger is preferably provided with one or more further suction pads for opening up the bags once they have been cut open.

In yet again a further embodiment these fingers too can be displaced parallel to the clamping surface to be able to process a greater variety of bags.

Preferably, the pins are located on either one of the two sides of the clamping components. Furthermore, the gripper is preferably a clamping plate which is fitted to the clamping components and is located in the clamping surface.

### Brief description of the drawings.

The invention will now be described in more detail below based on an example of embodiment of the gripper according to the invention while reference is made to the appended drawing figures, in which:
Fig. 1 shows a perspective view of an embodiment of the gripper according to the invention;
Fig. 2 shows a side view of the gripper during the suction of a bag;
Fig. 3 shows the situation during the turning action of the gripper with the clamping components and fingers being caused to surround the bag;
Fig. 4 shows the gripper in a position in which the bag is clamped in horizontal position;
Fig. 5 shows the gripper in the position in which the bag is held in a vertical position; and
Fig. 6 shows the gripper during the emptying of the bag.

### Detailed description of the drawings.

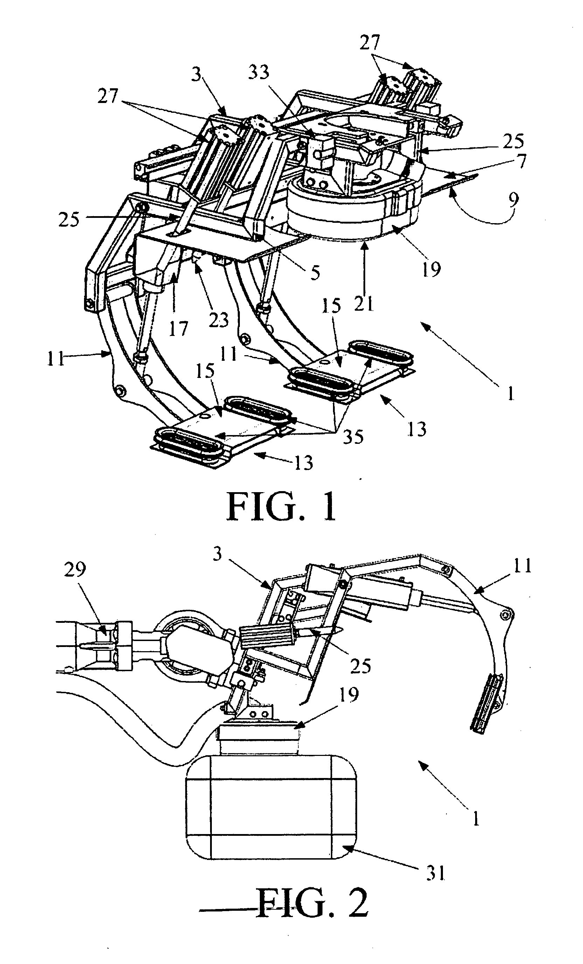

Fig. 1 shows a perspective view of an embodiment of the gripper according to the invention for gripping filled bags. The gripper 1 has a frame 3 comprised of two clamping components 5 to which a clamping plate 7 is fitted and which has a clamping surface 9.

The gripper 1 further has two fingers 11 which are pivotably connected to the frame 3. The fingers are shown in a position in which the free extremities 13 of the fingers are facing the clamping components 5. These free extremities are equipped with clamping plates 15 which are turnable. The fingers 11 can be moved by displacement means which are formed by two hydraulic or pneumatic cylinders 17.

Furthermore, the gripper 1 has a suction pad 19 which is displaceably connected to the frame 3 and is disposed between the clamping components 5. The suction pad has a suction opening which is confined along the periphery by a boundary edge 21. The gripper 1 in this Figure is shown to be in an active state in which the suction pad 19 with its boundary edge 21 is located in the clamping surface 9.

The gripper 1 further includes four pins 23, 25 which are displaceable between a retracted position, in which the pins are fully retracted to behind the clamping surface 9 (see Fig. 2), and a projected position in which the pins project out of the clamping surface (the position shown in Fig. 1). The pins can be displaced by means of further hydraulic or pneumatic cylinders 27. The pins form two pairs while the pins 23 or 25 respectively of each pair are located at two spots beside the suction pad 19 facing each other and on either one of the two sides of the clamping components 5.

Figs. 2 to 6 show the various steps of the grasping of a bag from a conveyor belt or pallet and bringing the bag in vertical position, so that it can be opened at the bottom and sides and emptied.

Fig. 2 shows a side view of the gripper when a bag is sucked onto the suction pad. The gripper is connected to the extremity of a robot arm 29. The extremity of the robot arm is adjustable in every degree of freedom. The suction pad 19 has grasped a filled bag 31 and the robot has lifted the gripper. The frame 3 and the fingers 11 are turned away from the bag 31 and the pins 25 are in a retracted state.

For grasping the bag 31 in the correct manner (the bag does not always lie in the right position on the conveyor belt or pallet) a 2D or 3D camera (not shown) is fitted to the frame 3 or installed as a stationary camera. This camera is connected to a control system (not shown) which controls the gripper 1 in response to image recognition.

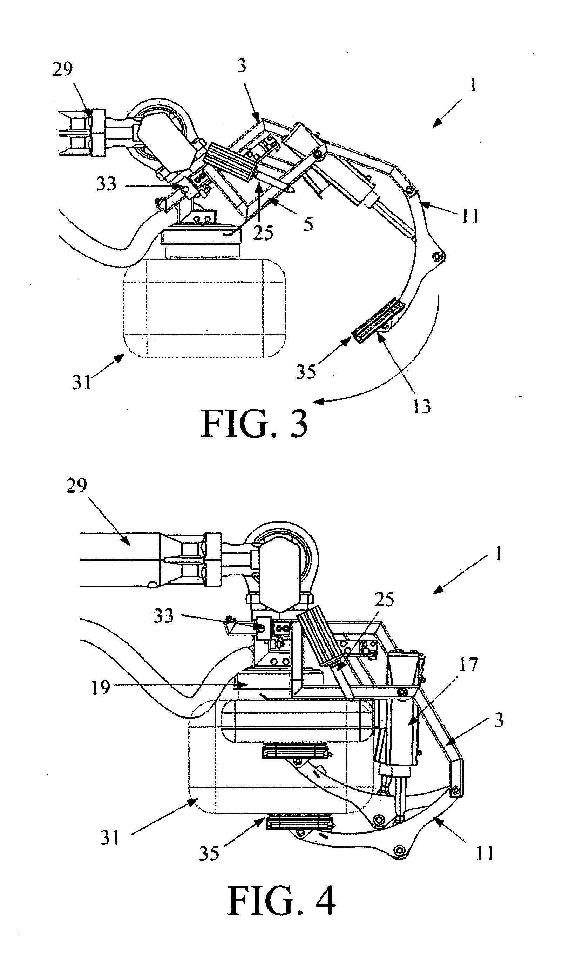

Subsequently, the frame 3 with the fingers 11 is turned by the robot arm 29 while the clamping components 5 and the extremities 13 of the fingers end up on either one of the two sides of the bag 31. Fig. 3 shows the situation during the turning action of the gripper 1.

In Fig. 4 the fingers 11 have ended right under the clamping surface subsequent to which the cylinders 17 press the fingers against the bag 31 (a small bag as well as a big bag are shown). The gripper 1 further has four further suction pads 35 which are present beside the clamping plates 15 and are also detachably connected to the free extremities of the fingers 11.

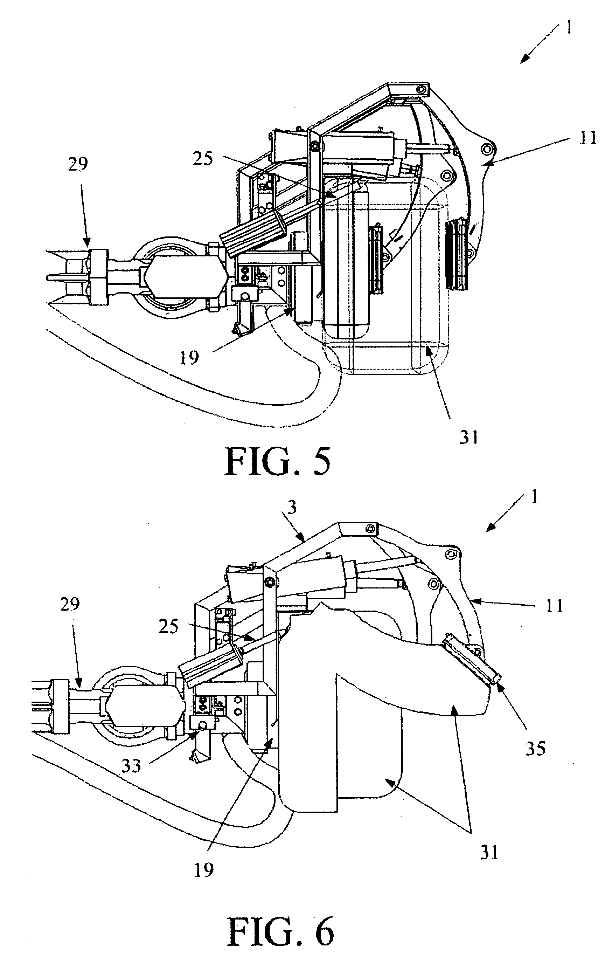

Then the gripper 1 is returned to the initial position by the robot arm 29 while the bag 31 (a small bag as well as a big bag are shown) is in a vertical position. This is shown in Fig. 5. In this position the bag 31 is cut open at the bottom and at the sides and then emptied, which is shown in Fig. 6.

This opening of the bag 31 is effected by having the bag 31 move past a stationary fixed or rotating cutting element (not shown). The fingers 11 with the further suction pads 35 mounted thereto tear the bag 31 open, so that the contents are falling out. During the emptying of the bag with the robot arm, but in lieu of this the bag can also be vibrated for example by having the suction pad 19 vibrate by means of the vibration means (not shown).

To prevent the bag 31 from falling down, the pins 25 are projected so that they pierce the bag and retain it in this way. The pins also hold the bag in better shape when the bag is emptied, more particularly the corners of the bag.

For emptying the bag 31 better and accellerating the emptying process the pins 25 may be provided with a channel and compressed air means (not shown) can blow air into the pins through the channels.

In the state shown in Figs. 5 and 6 a brake pad 33 is controlled which prevents the suction pad 19 from lowering while the bag 31 is being emptied.

Albeit the invention has been described in the foregoing based on the drawings, it should be observed that the invention is not by any manner or means restricted to the embodiment shown in the drawings. The invention also extends to all embodiments deviating from the embodiment shown in the drawings according to the scope defined by the claims.

## Claims

1. A gripper (1) for a manipulator for grasping products (31), more specifically filled bags (31), comprising:
- a mounting element with which the gripper can be mounted onto a manipulator (29),
- a frame (3) connected to the mounting element having at least a single clamping component (5) located in a clamping surface (9) against which clamping component (5) a product to be grasped can be clamped, as well as
- at least a single displaceable frame-connected finger (11) which is displaceable to a position in which the free extremity of the finger (13) is positioned opposite to the clamping surface, and
- frame-connected displacement means (17) for displacing the finger, at least a single suction pad (19) displaceably connected to the mounting element and having a suction opening which is confined by a boundary edge (21), **characterised in that** the suction pad (19) being movable to an active state in which the suction pad with the boundary edge (21) is located in the clamping surface (9).

2. A gripper as claimed in claim 1, **characterised in that** the suction pad (19) is pivotably connected to the mounting element.

3. A gripper as claimed in claim 1, **characterised in that** the suction pad (19) can be turned by the displacement means (17) connected to the mounting element.

4. A gripper as claimed in any one of the preceding claims, **characterised in that** the gripper comprises at least a single further suction pad (35) which is displaceably connected to the frame (3) and which can be displaced to a position in which the further suction pad is placed opposite to the suction pad (19) already present.

5. A gripper as claimed in claim 4, **characterised in that** the further suction pad (35) is connected to the displaceable finger (11).

6. A gripper as claimed in any one of the preceding claims, **characterised in that** the gripper further comprises at least a single frame-connected pin (23), which pin is displaceable to a position in which it can stick into the product to be grasped.

7. A gripper as claimed in claim 6, **characterised in that** the gripper comprises in addition to said pin (23) at least a single frame-connected further pin (25), with the pins forming a pair and being located at two spots facing each other beside the suction pad (19) when the gripper is in the active state.

8. A gripper as claimed in claim 7, **characterised in that** the gripper comprises in addition to said pair of pins (23,25) at least a single frame-connected further pair of pins of which the pins are located on the pair of pins' sides that are turned away from the suction pad (19).

9. A gripper as claimed in claim 6, 7 or 8, **characterised in that** the pin or the pins (23,25) can be displaced parallel to the clamping surface (9).

10. A gripper as claimed in claim 6, 7, 8 or 9, **characterised in that** the pin or pins (23,25) are provided with a channel and compressed air means are present for blowing air through the pin or pins.

11. A gripper as claimed in any one of the preceding claims, **characterised in that** the frame comprises in addition to said clamping component (5) a further clamping component which is located in the clamping surface (9), while the suction pad (19) in the active state is located in between the clamping components and **in that** the gripper comprises a further finger in addition to said finger (11), with the fingers being located opposite to the clamping components.

12. A gripper as claimed in claim 11, **characterised in that** the fingers (11) can be displaced parallel to the clamping surface (9).

13. A gripper as claimed in claim 7, 8, 9, 10, 11 and 12 **characterised in that** the pins (23,25) are located on either one of the two sides of the clamping components (5).

14. A gripper as claimed in any one of the preceding claims, **characterised in that** the gripper comprises a clamping plate (7) which is fitted to the clamping components (5) and is located in the clamping surface (9).

## Patentansprüche

1. Greifer (1) für einen Manipulator zum Fassen von Produkten (31), insbesondere von gefüllten Beuteln (31), der Folgendes umfasst:
- ein Montageelement, mit dem der Greifer an einem Manipulator (29) montiert werden kann,
- ein mit dem Montageelement verbundener Rahmen (3), versehen mit mindestens einem in einer Klemmfläche (9) vorhandenen Klemmteil (5), an das ein zu greifendes Produkt angepresst werden kann, sowie
- mindestens einen beweglich mit dem Rahmen verbundenen Finger (11), der bis in eine Stellung bewegt werden kann, in der das freie Ende (13) des Fingers gegenüber der Klemmfläche angeordnet ist, und
- mit dem Rahmen verbundene Positionierungsmittel (17) für die Positionierung des Fingers,
- mindestens einen Saugnapf (19), der beweglich mit dem Montageelement verbunden und mit einer Saugöffnung versehen ist, die von einem Begrenzungsrand (21) begrenzt wird,
**dadurch gekennzeichnet, dass** der Saugnapf (19) bis in eine Arbeitsstellung bewegt werden kann, in der sich der Saugnapf mit dem Begrenzungsrand (21) in der Klemmfläche (9) befindet.

2. Greifer nach Anspruch 1, **dadurch gekennzeichnet, dass** der Saugnapf (19) frei drehbar mit dem Montageelement verbunden ist.

3. Greifer nach Anspruch 1, **dadurch gekennzeichnet, dass** der Saugnapf (19) mittels mit dem Montageelement verbundener Positionierungselemente (17) drehbar ist.

4. Greifer nach einem der vorangegangenen Ansprüche, **dadurch gekennzeichnet, dass** der Greifer mindestens einen weiteren Saugnapf (35) umfasst, der beweglich mit dem Rahmen (3) verbunden ist und bis in eine Stellung bewegt werden kann, in der der weitere Saugnapf gegenüber dem bereits vorhandenen Saugnapf (19) angeordnet ist.

5. Greifer nach Anspruch 4, **dadurch gekennzeichnet, dass** der weitere Saugnapf (35) mit dem beweglichen Finger (11) verbunden ist.

6. Greifer nach einem der vorangegangenen Ansprüche, **dadurch gekennzeichnet, dass** der Greifer ferner mindestens eine mit dem Rahmen verbundene Nadel (23) umfasst, die bis in eine Stellung bewegt werden kann, in der die Nadel in das zu greifende Produkt stechen kann.

7. Greifer nach Anspruch 6, **dadurch gekennzeichnet, dass** der Greifer neben der genannten Nadel (23) mindestens eine mit dem Rahmen verbundene weitere Nadel (25) umfasst, wobei die Nadeln ein Paar bilden und, wenn der Greifer in Arbeitsstellung ist, an zwei einander gegenüberliegenden Positionen neben dem Saugnapf (19) angeordnet sind.

8. Greifer nach Anspruch 7, **dadurch gekennzeichnet, dass** der Greifer neben dem genannten Nadelpaar (23, 25) mindestens ein mit dem Rahmen verbundenes weiteres Nadelpaar umfasst, dessen Nadeln an jenen Seiten der Nadeln des Paars angeordnet sind, die dem Saugnapf (19) ab gewandt sind.

9. Greifer nach einem der Ansprüche 6, 7 oder 8, **dadurch gekennzeichnet, dass** sich die Nadel oder die Nadeln (23, 25) parallel zur Klemmfläche (9) bewegen lassen.

10. Greifer nach einem der Ansprüche 6, 7, 8 oder 9, **dadurch gekennzeichnet, dass** die Nadel oder die Nadeln (23, 25) mit einem Kanal versehen sind und dass Druckluftmittel vorhanden sind, mit denen Luft durch die Nadeln(n) geblasen wird.

11. Greifer nach einem der vorangegangenen Ansprüche, **dadurch gekennzeichnet, dass** der Rahmen neben dem genannten Klemmteil ein weiteres Klemmteil (5) umfasst, das in der Klemmfläche (9) angeordnet ist, wobei sich der Saugnapf (19) in der Arbeitsstellung zwischen den Klemmteilen befindet, und dass der Greifer neben dem genannten Finger (11) einen weiteren Finger umfasst, wobei die Finger gegenüber den Klemmteilen angeordnet sind.

12. Greifer nach Anspruch 11, **dadurch gekennzeichnet, dass** sich die Finger (11) parallel zur Klemmfläche (9) bewegen lassen.

13. Greifer nach einem der Ansprüche 6, 7, 8, 9, 10, 11 und 12, **dadurch gekennzeichnet, dass** die Nadel oder die Nadeln (23, 25) beiderseits der Klemmteile angeordnet sind.

14. Greifer nach einem der vorangegangenen Ansprüche, **dadurch gekennzeichnet, dass** der Greifer eine Klemmplatte (7) umfasst, die an den Klemmteilen (5) befestigt und in der Klemmfläche (9) angeordnet ist.

## Revendications

1. Grappin (1) pour un manipulateur, destiné à saisir des produits (31), plus particulièrement des sacs remplis (31), comprenant :
- un élément de montage permettant de monter le grappin sur un manipulateur (29),
- un cadre relié à l'élément de montage (3) et doté d'au moins une pièce de serrage (5) présente dans une surface de serrage (9) contre laquelle un produit à saisir peut être coincé, de même que
- au moins un doigt déplaçable (11) relié avec le cadre, qui est déplaçable jusqu'à une position dans laquelle l'extrémité libre (13) du doigt est présente en face de la surface de serrage, et
- de moyens de déplacement (17) reliés au cadre pour le déplacement du doigt,
- au moins une ventouse (19) qui est reliée de manière déplaçable avec l'élément de montage et est dotée d'une ouverture d'aspiration qui est délimitée par le bord de délimitation (21),
**caractérisé en ce que** la ventouse (19) est déplaçable jusqu'à une position de travail dans laquelle la ventouse, avec le bord de délimitation (21), est présente dans la surface de serrage (9).

2. Grappin selon la revendication 1, **caractérisé en ce que** la ventouse (19) est reliée, de manière à pouvoir être orientée librement, avec l'élément de montage.

3. Grappin selon la revendication 1, **caractérisé en ce que** la ventouse (19) peut être orientée par des moyens de déplacement (17) reliés avec l'élément de montage.

4. Grappin selon une des revendications précédentes, **caractérisé en ce que** le grappin comprend au moins une autre ventouse (35) qui est reliée de manière déplaçable avec le cadre (3) et qui est déplaçable jusqu'à une position dans laquelle l'autre ventouse est présente en face de la ventouse (19) déjà présente.

5. Grappin selon la revendication 4, **caractérisé en ce que** l'autre ventouse (35) est reliée avec le doigt (11) déplaçable.

6. Grappin selon une des revendications précédentes, **caractérisé en ce que** le grappin comprend en outre au moins une broche (23) reliée avec le cadre, qui est déplaçable jusqu'à une position dans laquelle la broche peut s'enfoncer dans le produit à saisir.

7. Grappin selon la revendication 6, **caractérisé en ce que** le grappin, outre la broche (23) mentionnée, comprend au moins une autre broche (25) reliée avec le cadre et **en ce que** les broches forment une paire et **en ce que**, en position de travail du grappin, les broches sont présentes à deux endroits l'un en face de l'autre, à côté de la ventouse (19).

8. Grappin selon la revendication 7, **caractérisé en ce que** le grappin, outre la paire de broches (23, 25) mentionnée, comprend au moins une autre paire de broches reliées avec le cadre dont les broches sont présentes sur les côtés opposés à la ventouse (19) des broches de la paire.

9. Grappin selon la revendication 6, 7 ou 8, **caractérisé en ce que** la broche ou les broches (23, 25) sont déplaçables parallèlement à la surface de serrage (9).

10. Grappin selon la revendication 6, 7, 8 ou 9, **caractérisé en ce que** la broche ou les broches (23, 15) sont munies d'un conduit et **en ce que** des moyens à air comprimé sont présents pour insuffler de l'air au travers de la broche ou des broches.

11. Grappin selon une des revendications précédentes, **caractérisé en ce que** le cadre comprend, outre la pièce de serrage mentionnée, une autre pièce de serrage (5) qui est présente dans la surface de serrage (9) et **en ce que** la ventouse (19), en position de travail, est présente entre les pièces de serrage et **en ce que** le grappin, outre le doigt (11) mentionné, comprend un autre doigt et **en ce que** les doigts sont présents en face des pièces de serrage.

12. Grappin selon la revendication 11, **caractérisé en ce que** les doigts (11) sont déplaçables parallèlement à la surface de serrage (9).

13. Grappin selon les revendications 7, 8, 9, 10, 11 et 12, **caractérisé en ce que** les broches (23, 25) sont présentes de part et d'autre des pièces de serrage.

14. Grappin selon une des revendications précédentes, **caractérisé en ce que** le grappin comprend une plaque de serrage (7) qui est fixée aux pièces de serrage (5) et est présente dans la surface de serrage (9).
